# EUROPÄISCHE PATENTSCHRIFT

(11) **EP 1 743 789 B1**
(45) Veröffentlichungstag und Bekanntmachung des Hinweises auf die Patenterteilung: **05.11.2008**
(21) Anmeldenummer: 06014564.6
(22) Anmeldetag: 13.07.2006
(51) Int. Cl.: B60H 1/00

(54) **Führung, insbesondere Luftführung für ein Kraftfahrzeug**
Duct, in particular air duct for a vehicle
Conduite, en particulier conduite d'air pour véhicule

(30) Priorität: 14.07.2005 DE 102005033519
(43) Veröffentlichungstag der Anmeldung: 17.01.2007
(73) Patentinhaber: Behr GmbH & Co. KG, 70469 Stuttgart (DE)
(72) Erfinder: Derleth, Martin, Dipl.-Ing, 97453 Schonungen (DE); Fieger, Martin, Dipl.-Ing., 71636 Ludwigsburg (DE); Herrgott, Anna, Dipl.-Ing., 71706 Markgröningen (DE); Merkle, Christian, 73655 Plüderhausen (DE); Schmitz, Jochen, Dipl.-Ing., 71229 Leonberg (DE); Wolf, Walter, Dipl.-Ing., 71570 Oppenweiler-Zell (DE)

(56) Entgegenhaltungen:
- EP-A- 0 952 306
- GB-A- 2 149 469
- US-A- 4 327 775

## Beschreibung

Die Erfindung betrifft eine Führung, insbesondere eine Luftführung für ein Kraftfahrzeug und vorzugsweise für eine Integration in einen Querträger, gemäß dem Oberbegriff des Anspruchs 1. Neben Luft können auch andere Medien, insbesondere auch Flüssigkeiten oder Partikel durch die Führung gefördert oder geleitet werden.

Aus der DE 100 64 522 A1 ist ein Querträger zum Anordnen zwischen den A-Säulen eines Kraftfahrzeugs mit einem im Wesentlichen rohrartigen Grundkörper bekannt, in dem wenigstens ein Kanal vorgesehen ist. Um ein verbessertes Leichtbauteil zur Verfügung zu stellen, das einfach, mit wenigen Arbeitsschritten und daher kostengünstig herzustellen ist, ist der Grundkörper innen mit Kunststoff ausgekleidet zur Bildung von aus Kunststoff bestehenden Kanalwänden.

Ferner ist aus der EP 1 075 972 A2 ein Luftleitsystem für ein Kraftfahrzeug bekannt, gemäß dem in einem geschlossenen Querträger ein Luftführungsrohr integriert ist, wobei der Querträger mit einer auf die Träger-Innenfläche aufgebrachten Wärmeisolationsschicht versehen ist. Der Querträger ist als Querträger für die Instrumententafel ausgebildet und erstreckt sich über die Breite des Fahrzeuginnenraums und ist mit den A-Säulen des Fahrzeugs über Endstücke verschraubt. Er weist endseitig sich mit verjüngendem Querschnitt ausgebildete und zum Fahrzeuginnenraum abgebogene Übergangsabschnitte auf, die in seitlichen Anschlussflanschen enden. Integral mit dem Querträger verbunden sind ferner Befestigungsstellen für die Instrumententafel, die Knieschutzhalter, eine zwischen diesen liegende Lenksäulenstütze eine Befestigungslasche für den Beifahrer-Airbag sowie zwei den Querträger im Mittelabschnitt am Fahrzeugtunnel abstützende Rechteckstreben, zwischen denen das Heiz- und Klimagerät angeordnet ist.

Der Querträger gemäß der EP 1 075 972 A2 dient unter anderem der Luftführung vom Heiz- und Klimagerät zu den vorderen Seitenfenster-Belüftungsdüsen und enthält zu diesem Zweck zwei an das Heiz- und Klimagerät anschließbare, symmetrisch zur Trägermitte angeordnete Verbindungsflansche, die durch eine Zwischenwand im Trägerinneren voneinander getrennt sind. Aus Korrosionsschutzgründen und um störende Wärmespeichereffekte des Hohlträgermaterials zu unterbinden, ist das Trägerinnere mit einer feuchtigkeitssperrenden und wärmedämmenden Isolationsschicht, bspw. aus einem geschlossenporigen Schaumstoff belegt, die sich auf jeder Halbseite des Querträgers unter Einbeziehung der Flanschabschnitte durchgehend über die Trägerinnenfläche erstreckt. Auf diese Weise wird der Querträger als Luftführungsrohr unmittelbar in das Luftleitsystem des Kraftfahrzeugs einbezogen, ohne dass zum Anschluss der seitlichen Belüftungsdüsen an die Anschlussflansche und/oder das Heiz- und Klimagerät an die Verbindungsflansche gesonderte Luftleit- oder -umlenkstücke angefügt werden müssen. Hergestellt wird der Querträger einschließlich sämtlicher Anschlussstellen als einstückiges Bauteil, etwa aus Aluminium im Druckguss- oder Innenhochdruckverfahren. Dabei werden die luftein- und -auslassseitigen Querträgeröffnungen entsprechend dem benötigten Strömungsquerschnitt zuzüglich der Wandstärke der Isolationsschicht so klein wie möglich gehalten und im Randbereich noch zusätzlich durch die Flanschabschnitte versteift. Nach dem Aufbringen des Schaumstoffmaterials auf die Trägerinnenflächen - ggf. unter Zwischenlage einer Klebstoffschicht - ist der Querträger einbaufertig.

Aus der gattungsgemäßen EP 0 952 306 A1 ist ein Schlauch gemäß dem Oberbegriff des Anspruchs 1 bekannt.

Die Integration derartiger Führungen lässt jedoch noch Wünsche offen, insbesondere in Hinblick auf die Handhabbarkeit.

Es ist Aufgabe der Erfindung, eine verbesserte Führung zur Verfügung zu stellen.

Diese Aufgabe wird gelöst durch eine Führung mit den Merkmalen des Anspruchs 1. Vorteilhafte Ausgestaltungen sind Gegenstand der Unteransprüche.

Erfindungsgemäß ist eine Führung, insbesondere Luftführung für ein Kraftfahrzeug, vorgesehen, wobei die Führung mindestens eine Sollfaltstelle als Falthilfe aufweist, wobei das Material der Führung im Bereich einer Sollfaltstelle verdichtet ist.

Die Führung selbst ist bevorzugt schlauchartig ausgebildet, wobei insbesondere kreisförmige, ovale, viereckige oder andere mehreckige Querschnitte möglich sind, jedoch sind auch beliebige andere Querschnitte möglich. Zudem kann die Führung Krümmungen und/oder Verzweigungen aufweisen. Die Falthilfe dient einem definierten Zusammen- und Auseinanderfalten der Führung im Bereich einer oder mehrerer Sollfaltstellen im Rahmen der Montage und ggf. Demontage, wobei insbesondere die für den Einbau relevanten Abmessungen durch das Falten verringert werden. Unter Falten wird hierbei eine wesentliche Änderung des Querschnitts verstanden, wobei der Ausgangszustand vor dem Falten einen deutlich größeren Querschnitt als der gefaltete Zustand aufweist. Die für den Einbau relevanten Abmessungen, d.h. insbesondere der Querschnitt der Führung, werden temporär für die Montage oder Demontage verringert, wobei bevorzugt keine plastischen Verformungen sondern rein elastische Verformungen der Führung auftreten. Durch die Verformung der Führung lässt sich dieselbe mit geringerem Aufwand, insbesondere mit geringerem Kraftaufwand, in das entsprechende Bauteil, bspw. einen Kraftfahrzeug-Querträger, einbringen.

Zum leichteren Einführen kann femer eine Einführhilfe vorgesehen sein, welche die Montage erleichtert. Die Einführhilfe wird bevorzugt durch ein noch einfacher einzuführendes Element, wie ein Band, ein Seil oder einen Draht, gebildet, das an einem Ende der Führung lösbar angebracht ist, bspw. mittels Klemmen. Ebenso kann die Einführhilfe auch durch einen bevorzugt elastischen Schlauch gebildet sein, durch welchen auch Luft aus dem Innenraum der Führung abgesaugt und/oder ein Überdruck angelegt werden kann.

Die Führung ist vorzugsweise zumindest bereichsweise elastisch ausgebildet, so dass ein einfaches Zusammenfalten möglich ist. Die Elastizität ermöglicht zudem ein automatisches Auseinanderfalten nach erfolgter Montage. Im Bereich der Sollfaltstelle ist bevorzugt die Elastizität größer als in den hierzu benachbarten Bereichen. Dabei kann die Falthilfe sowohl direkt durch den Bereich der Sollfaltstelle mit größerer Elastizität als auch durch benachbarte Bereiche, die bspw. versteift sind, ausgebildet sein.

Als Materialien für die Führung, insbesondere für eine Luftführung, kommen insbesondere Schäume, wie PU-Schäume, thermoplastische Schäume, thermoplastisches Polyolefin (TPO), thermoplastisches Polyurethan (TPU), chemisch geschäumte Thermoplaste, insbesondere physikalisch geschäumte Thermoplaste (wie insbesondere PE, PP, PA, PS, PPS), bedingt auch Partikelschäume oder Mineralschäume, mit unterschiedlichsten Bindern in Frage. So sind insbesondere EPP, EPE, EPS, EPS/PPO, XPP, XPE oder chemisch oder physikalisch geschäumte Polyolefine geeignet, die zudem isolierende Eigenschaften aufweisen. Aus Feuchtigkeitsgründen ist der Schaum bevorzugt geschlossenporig ausgebildet. Besonders geeignet ist ein chemisch geschäumter Schaumstoff aus Trocellen^{®} , C 070 04 RN5 oder C 070 03 RN5.

Die Falthilfe ist - insbesondere im Falle von Schäumen - durch ein bereichsweises Zusammenpressen oder Prägen des Schaums, ggf. auch unter erhöhter Temperatur und/oder Vibrationen, gebildet, d.h. in diesem Bereich ist die Materialdichte größer als im umgebenden, nicht zusammengepressten Bereich. Die Materialverdichtung kann bspw. auch mittels Vibrationsschweißens oder mittels eines heißen Drahts elektrisch erfolgen. Auch ein Zusammenpressen bei Raumtemperatur ist häufig bereits ausreichend.

Die Falthilfe kann zusätzlich eine Sicke oder Falte (Materialverdoppelung) nach innen oder außen aufweisen. Dabei fallen im Falle einer Falte Falthilfe und Sollfaltstelle nicht zusammen.

Die Falthilfe gebildet durch eine Materialverdichtung, kann insbesondere sowohl vor Ausformung der Führung im Ausgangsmaterial (Vorprodukt) als auch während oder nach der Ausformung der Führung hergestellt werden.

Die Falthilfe kann auch zusätzlich neben der Sollfaltstelle vorgesehene Materialverdickungen oder -versteifungen aufweisen, insbesondere durch aufgebrachtes Material, wie bspw. Kunststoffstreifen, bspw. aus dem gleichen Material wie die Führung, oder Drähte.

Liegt die Führung im eingebauten Zustand direkt (dicht) an einer Wand an, so sind ggf. auch Perforationen, Aussparungen o.ä, als Falthilfen denkbar. Hierbei muss jedoch die Funktion der Führung im eingebauten Zustand gewährleistet sein. Ebenso sind nicht ganz durchgehende Ritze oder Perforationen möglich.

Die Dicke der Wand der Führung, insbesondere einer Luftführung, beträgt üblicherweise 1,2 bis 6 mm, vorzugsweise 1,8 bis 5 mm, insbesondere ca. 2 bis 3 mm.

Die Dicke d der Wand im Bereich der Falthilfe, sofern diese durch eine Materialverjüngung gebildet ist, ist um mindestens 30%, vorzugsweise um mindestens 50% geringer, um eine gezielte Faltung zu ermöglichen. Dabei liegt die Dicke d der Wand im Bereich der Falthilfe bevorzugt in einem Bereich von 0,5 bis 4 mm, insbesondere im unteren Drittel dieses Bereichs - unabhängig von der Dicke der Wand im benachbarten Bereich.

Die Führung weist im gefalteten Zustand bevorzugt einen U-, C-, X-, H-, W-, V-, I-, L- oder rautenförmigen Querschnitt im Bereich quer durch die Falthilfe(n) auf, jedoch sind insbesondere auch asymmetrische und/oder flache Querschnitte möglich.

Die Falthilfe ist vorzugsweise im Bereich einer Krümmung vorgesehen, wobei sie insbesondere seitlich an der Führung beidseitig ausgebildet und gerade, tangential zum mittleren Krümmungsradius der Krümmung verläuft. Dies ermöglicht ein einfaches Einfalten des äußeren Krümmungsbereichs. Wird die Führung in einen Hohlraum eingezogen, so kann dies in Folge der geringeren Querabmessungen nach dem Zusammenfalten deutlich einfacher erfolgen als ohne Zusammenfalten.

Die Führung wird vorzugsweise in den Querträger eingelegt, wobei sie zur Fixierung an den Innenflächen des Querträgers zumindest bereichsweise angeklebt werden kann. Im Idealfall erfolgt jedoch kein Ankleben.

Das Zusammenfalten erfolgt unter Anlage eines Unterdrucks, wofür mindestens ein Ende verschlossen wird, bevorzugt mittels Zusammenklemmens, Umfaltens oder mittels eines Stopfens oder eines anderen Verschlusses. Das Ende kann auch herstellungsbedingt verschlossen sein und nach der Montage ab- oder aufgeschnitten werden. Dies ist insbesondere bei blasgeformten Schläuchen, bspw. im Twin-Sheet-Verfahren hergestellt, vorteilhaft.

Ebenfalls kann das Zusammenfalten mit Hilfe eines Trichters oder zumindest einer trichterförmigen Einführhilfe erfolgen, wobei bevorzugt Stifte oder Rippen vorgesehen sind, welche während des Einführens der Führung auf die einzufaltenden Bereiche drücken.

Das Auseinanderfalten erfolgt bevorzugt unter Anlage eines Überdruckes nach erfolgtern Einführen und Positionieren der Führung, wobei in Folge des Überdrucks die eingefalteten Bereiche nach außen gedrückt werden und die Führung die ursprüngliche Gestalt wieder annimmt. Zusätzlich oder an Stelle eines Überdrucks können Vibrationen das Auseinanderfalten unterstützen bzw. bewirken.

Im Folgenden wird die Erfindung anhand mehrerer Ausführungsbeispiele unter Bezugnahme auf die Zeichnung im Einzelnen erläutert. In der Zeichnung zeigen:
- Fig. 1a-1d: gängige Verläufe von Luftführungen in oder im Bereich von Querträgern,
- Fig. 2a: einen kreisförmigen Querschnitt einer Luftführung,
- Fig. 2b: den Querschnitt von Fig. 2a im gefalteten Zustand,
- Fig. 3a: einen quadratischen Querschnitt einer Luftführung,
- Fig. 3b: den Querschnitt von Fig. 3a im gefalteten Zustand,
- Fig. 3c: den Querschnitt von Fig. 3a in einer Variante der Faltung,
wobei der ungefaltete Zustand mit leicht übertriebener Größe gestrichelt um den gefalteten Zustand dargestellt ist,
- Fig. 4a: einen quadratischen Querschnitt einer Luftführung mit durch Pfeilen angedeuteten Faltstellen,
- Fig. 4b: den Querschnitt von Fig. 4a während des Faltvorgangs,
- Fig. 5a: einen quadratischen Querschnitt einer Luftführung mit durch Pfeilen angedeuteten Faltstellen,
- Fig. 5b: den Querschnitt von Fig. 5a nach dem Faltvorgang,
- Fig. 5c: eine Variante des Faltens,
- Fig. 6: eine Darstellung eines Bereichs der Luftführung mit Falthilfe,
- Fig. 7: eine Detaildarstellung des Bereichs der Falthilfe von Fig. 6,
- Fig. 8a,8b: zwei verschiedene Ausführungsformen von Falthilfen,
- Fig. 9a,9b: ein erstes Beispiel des Faltens von Luftführungen mit Hilfe von Falthilfen und Unterdruck,
- Fig. 10a, 10b: ein zweites Beispiel des Faltens von Luftführungen mit Hilfe von Falthilfen und Unterdruck,
- Fig. 11a, 11b: ein drittes Beispiel des Faltens von Luftführungen mit Hilfe von Falthilfen und Unterdruck,
- Fig. 12a, 12b: Seitenansichten einer Falthilfe vor und nach dem Falten,
- Fig. 12c: eine Seitenansicht mit Darstellung der Faltmarke,
- Fig. 12d: eine Seitenansicht zur Darstellung des Einziehens der Luftführung in einen Querträger,
- Fig. 12e, 12f: Schnitte entlang Linie A-A in Fig. 12c vor und nach dem Falten,
- Fig. 12g: eine Seitenansicht mit Darstellung der Faltmarke eines weiteren Ausführungsbeispiels,
- Fig. 13a, 13b: Schnitte durch eine Luftführung vor und nach dem Falten,
- Fig. 13c: einen Schnitt durch einen Querträger mit der gefalteten Luftführung von Fig. 13b,
- Fig. 14: zwei beispielhafte perspektivische Ansichten eines Querträgers, in welchen eine Luftführung integriert ist,
- Fig. 15a: ein erstes Ausführungsbeispiel einer trichterförmigen Einführhilfe,
- Fig. 15b: ein zweites Ausführungsbeispiel einer trichterförmigen Einführhilfe,
- Fig. 15c: ein drittes Ausführungsbeispiel einer trichterförmigen Einführhilfe,
- Fig. 16: eine Seitenansicht eines Querträgers mit Einführhilfen, und
- Fig. 17: eine Seitenansicht eines Querträgers mit Einführhilfen und angesetzter Luftführung.

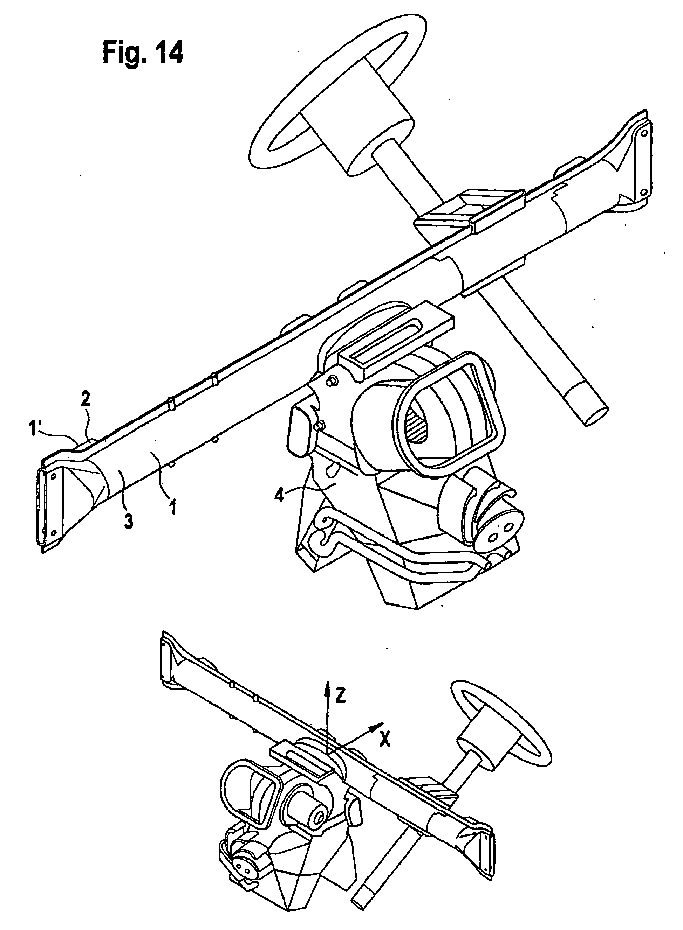

Ein Querträger 1 eines Kraftfahrzeugs mit integrierten Luftkanälen ist vorliegend, wie in Fig. 14 dargestellt, durch eine erste Halbschale 2 und eine zweite Halbschale 3 gebildet. Dabei weist die erste Halbschale 2 vier Öffnungen für den Luftaustritt durch Düsen (Mittel- und Seitendüsen) in den Fahrzeuginnenraum und die zweite Halbschale 3 eine zentrale Öffnung für den Lufteintritt der von einer Klimaanlage 4 kommenden Luft auf. Hierbei ist das Material des Querträgers in Richtung des entsprechenden Anschlussbauteils weisend, vorstehend ausgebildet, d.h. die Wand des Querträgers 1 verläuft im Bereich der Öffnungen im Wesentlichen in oder entgegen der Luftströmungsrichtung.

Bei den beiden den Querträger 1 bildenden Halbschalen 2 und 3 handelt es sich jeweils um eine Metallstruktur, die mittels Tiefziehen und nachfolgendem Bearbeiten hergestellt ist. Andere Herstellungsarten, wie insbesondere Strangpressen oder Walzen, sind ebenfalls möglich. Das Profil kann auch aus einstückigen Profilkörpern gebildet sein und im Prinzip beliebige Querschnittsformen aufweisen. Ebenfalls sind auch mehrere Kammern im Profilquerschnitt möglich. Die Profilverläufe können insbesondere gerade, gleichmäßig in einer Ebene gekrümmt bis hin zu räumlich gekrümmt sein.

Die Enden des Querträgers 1 sind in Folge des Umformvorgangs verbreitert ausgebildet, so dass sie als versteifendes Element dienen. Dadurch ergibt sich, dass das Verhältnis einer ersten Fläche und einem ersten Umfang in einem mittleren Querschnitt kleiner als das Verhältnis einer zweiten Fläche und einem zweiten Umfang in den beiden Endbereichen ist. Die verbreiterte Ausgestaltung der Endbereiche ermöglicht eine momentensteife Anbindung.

Zur Begrenzung einer Verformung der Endbereiche durch zu große Krafteinwirkung, beispielsweise von Montageschrauben, sind Stützkörper, vorliegend in Form von Hülsen (nicht dargestellt), vorgesehen, welche in Verlängerung von Montagebohrungen, die in den Endbereichen zwecks Anbringung des Querträgers 1 vorgesehen sind, im Innenraum des Querträgers 1 angeordnet sind.

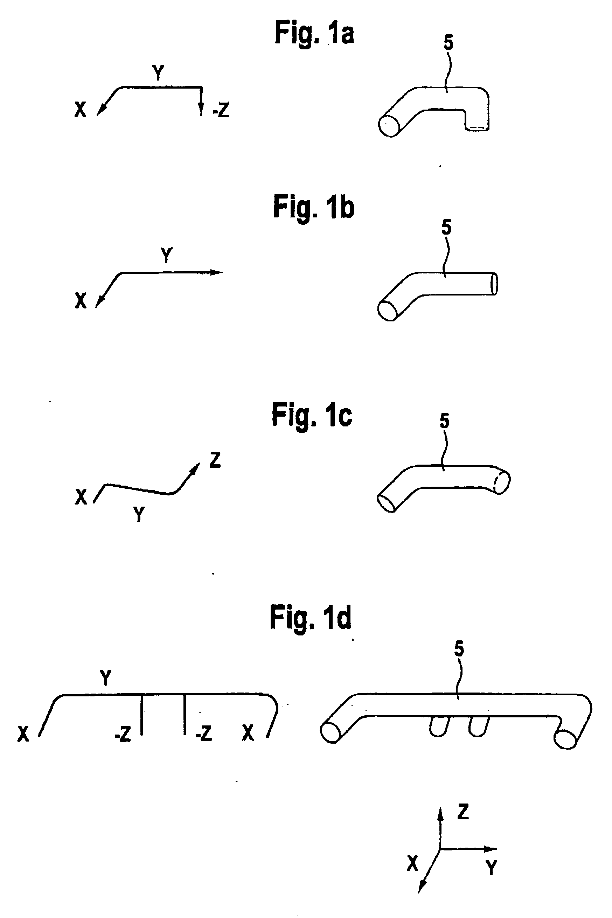

An den Längsseiten der Halbschalen 2 und 3 sind jeweils nach außen abstehende Ränder vorgesehen, die in Anlage miteinander gebracht und auf bekannte Weise zusammengefügt werden. Der Innenraum zwischen den beiden Halbschalen 2 und 3 ist hohl und weist zwei die o.g. Luftkanäle bildenden Luftführungen 5 auf, die einen Bereich der Luftkanäle des Belüftungssystems bildet, so dass die direkte Durchführung von Luft von der Klimaanlage zu den Öffnungen möglich ist. Damit ist ein Teil des Belüftungssystems direkt in den Querträger 1 integriert. Der Verlauf des Luftkanals ist in Fig. 1d schematisch dargestellt.

Vorliegend ist die Luftführung 5, die im Wesentlichen ausgebildet ist, wie in Fig. 1d dargestellt und einen kreisförmigen Querschnitt aufweist, nach dem Einführen derselben an der Innenfläche des Querträgers 1 angeklebt, jedoch sind auch andere Befestigungsmöglichkeiten möglich, prinzipiell kann auch Formschluss bei ausreichender Stabilität der Luftführung 5 ausreichen. Die Luftführung 5 besteht gemäß dem ersten sowie den folgenden Ausführungsbeispielen aus einem geschlossenporigen Schaumstoff, der eine gewisse Elastizität aufweist.

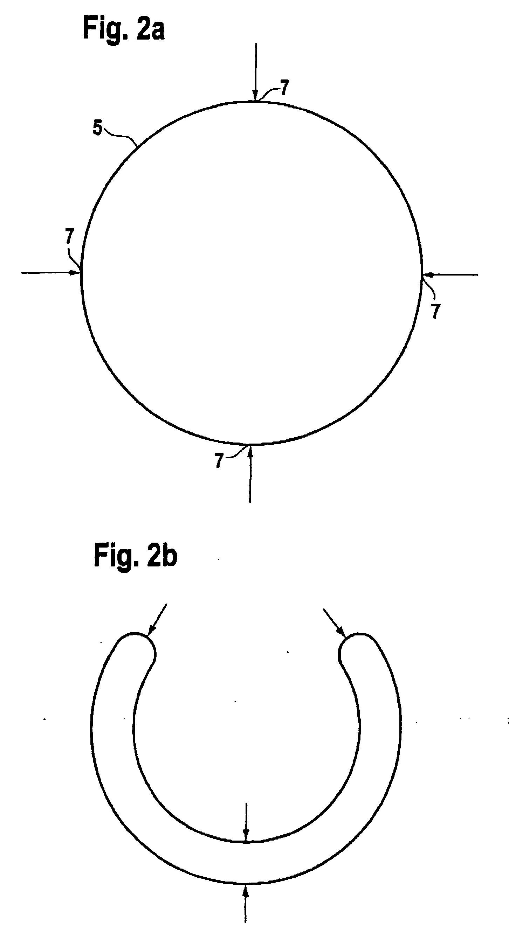

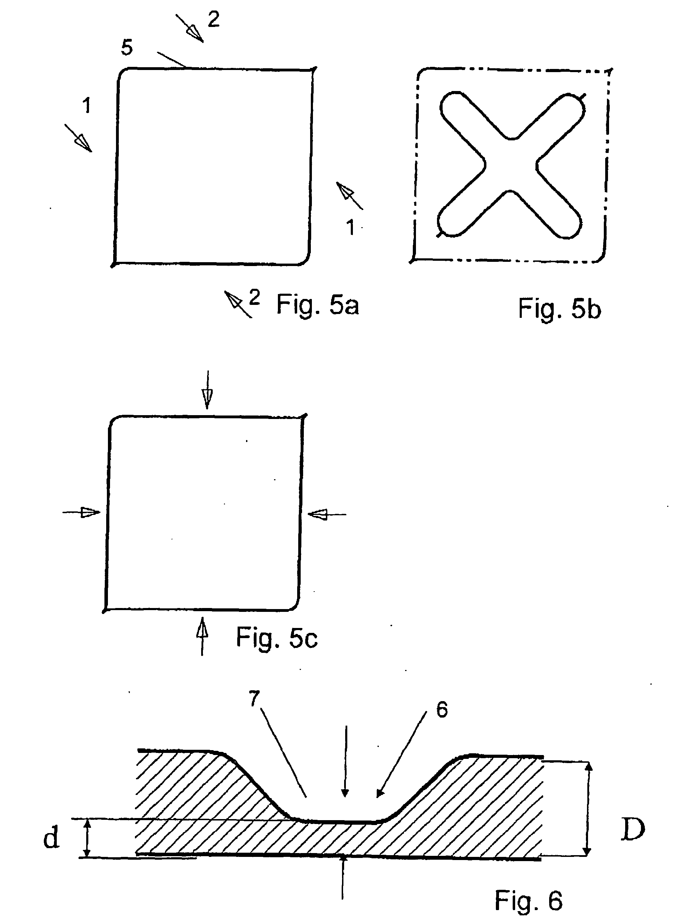

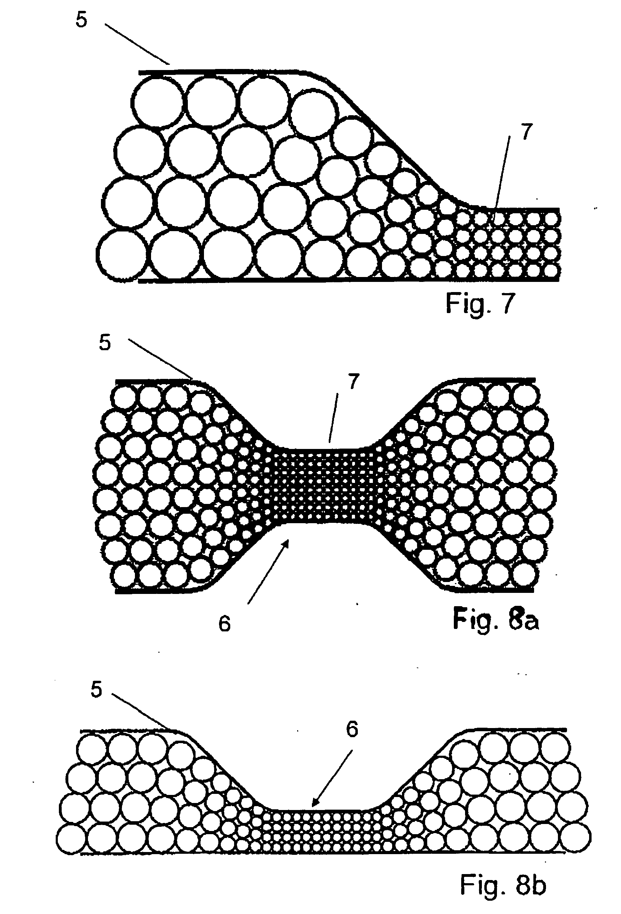

Um das Einführen der Luftführung 5 im Rahmen der Montage zu erleichtern, ist die Luftführung 5 zusammenfaltbar ausgebildet. Dabei ist sie jedoch so stabil ausgebildet, dass sie sich nicht von selbst faltet. Um das Zusammenfalten zu erleichtern und insbesondere um als Falthilfen 6 dienende Sollfaltstellen vorzusehen, sind Materialverjüngungen 7, wie in den Figuren 6, 7 und 8b oder alternativ in Fig. 8a dargestellt, in den Bereichen vorgesehen, die während des Zusammenfaltens stark verformt werden. Auf die Falthilfen 6 wird im Folgenden teilweise auch als Faltmarken Bezug genommen. Unter Bezugnahme auf Fig. 2a und 2b sind die Stellen, in welchen Materialverjüngungen 7 vorgesehen sind, an den Schenkelenden des "U" und im unteren Bereich vorgesehen. Die entsprechenden Bereiche sind in den Figuren 2a und 2b nicht dünner dargestellt, sondern nur durch Pfeile markiert. Vorliegend weist die Wand der Luftführung 5 eine Dicke D von 2 bis 3 mm auf, im Bereich der Falthilfe ist diese auf die Dicke d von 1,5 mm verringert.

Um die Luftführung 5 zu falten wird ein Ende derselben verschlossen, bspw. mittels Zuklemmen der Öffnung, die der Öffnung, in welche die Luftpumpe eingeführt ist, gegenüberliegt. Anschließend wird die Luft aus der Luftführung 5 gesaugt, so dass im Inneren ein Unterdruck herrscht, woraufhin die Wände der Luftführung 5 zusammengezogen werden und sich in den Bereichen der Materialverjüngungen 7 falten (vgl. Fig. 2b). Nach dem Absenken des Innendrucks wird auch die andere Öffnung mittels Zuklemmens luftdicht verschlossen. Auf Grund der deutlich verringerten Außenabmessungen lässt sich die gefaltete Luftführung 5 relativ einfach in den Hohlraum des Querträgers 1 einführen, vorliegend mittels Einziehens, wofür eine nicht in der Zeichnung dargestellte Einführhilfe in Form eines Zugdrahts vorgesehen ist, der an der zugeklemmten Öffnung angebracht ist und durch den Querträger 1 geführt ist. Ist die Luftführung 5 positioniert, so wird der Unterdruck aufgehoben, indem die Klemmverschlüsse geöffnet werden, woraufhin sich die Luftführung 5 durch die elastische Verformung der Bereiche mit Materialverjüngungen 7 entfaltet, und gelangt in Folge der auf den Hohlraum im Querträger 1 abgestimmten Abmessungen in Anlage an die Innenfläche des Querträgers 1.

Gemäß einer Variante wird für das Auffalten ein Überdruck angelegt. Der Auffaltvorgang kann zudem, d.h. mit oder ohne Überdruck, durch Vibrationen unterstützt werden.

Alternativ zum Einziehen mit Hilfe einer Einführhilfe kann die Führung auch eingeschoben werden.

Nach erfolgtem Einbau der Luftführung 5 in den Querträger 1 kann auf bekannte Weise an einer Seite die Klimaanlage 4 und auf der anderen Seite der entsprechende Ausströmer angebracht werden.

Auf entsprechende Weise lassen sich auch verzweigte Luftführungen einbauen, wobei in diesem Fall bevorzugt Faltungen sowohl in Längsrichtung als auch Einfaltungen in Krümmungsbereichen vorgesehen sind.

Die Luftführung muss nicht notwendigerweise so kompliziert ausgebildet sein, wie in Fig. 1d dargestellt. Vielmehr können auch Teilabschnitte oder Luftführungen, wie bspw in den Figuren 1a bis 1c dargestellt, entsprechend gefaltet werden.

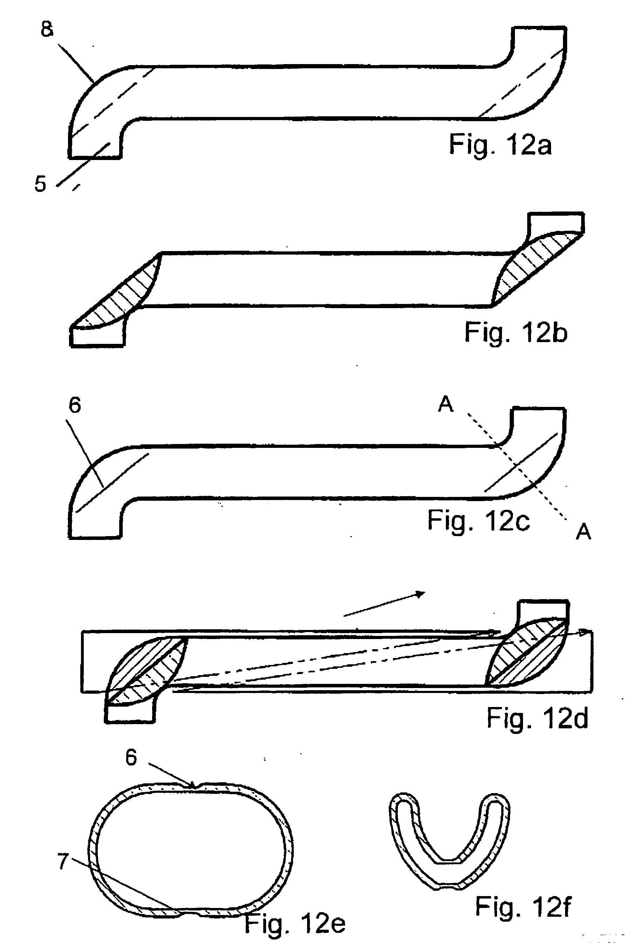

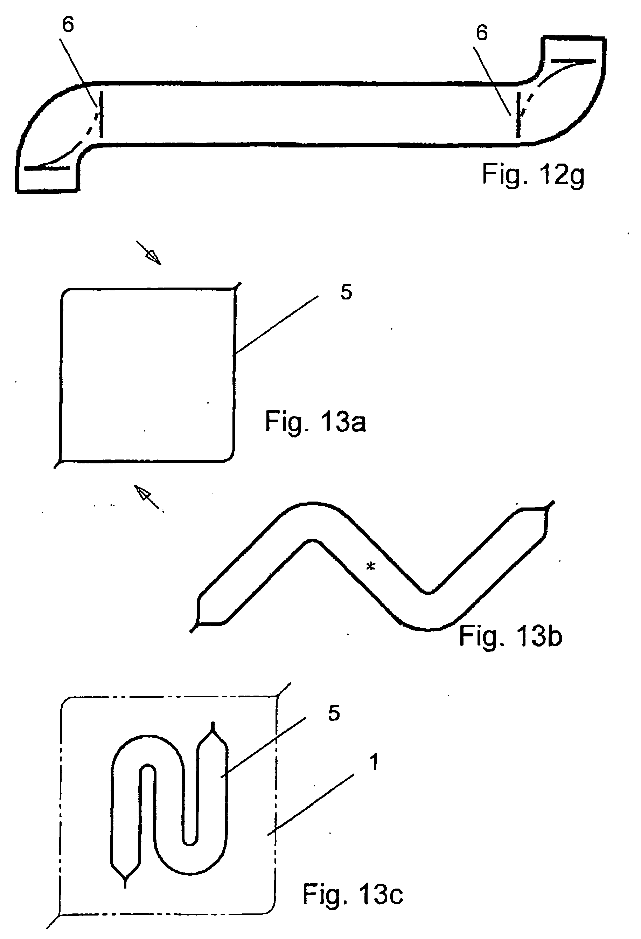

Die Faltung kann in Längsrichtung der Luftführung verlaufen. Insbesondere bei mehrfach abgewinkelten Luftführungen 5, wie bspw. in den Figuren 12a bis 12g dargestellt, können die Eckbereiche 8 jedoch eingefaltet werden, ggf. auch zusätzlich zu Faltungen, die in Längsrichtung der Luftführung verlaufen, wofür entsprechend verlaufende Falthilfen 6, vorliegend wiederum in Form von Materialverjüngungen 7, vorgesehen sind (vgl. Fig. 12). Nach dem Zusammenfalten der Eckbereiche 8 (vgl. Schnittdarstellung von Fig. 12f) kann die Luftführung 5 einfach in im Wesentlichen gerader Richtung eingezogen werden, wie in Fig. 12d durch einen Pfeil angedeutet. Um das Einziehen zu erleichtern, kann durch die Öffnungen ein Band, ein Seil, einen Draht o.ä. geführt werden und dieses vor dem Absenken des Innendrucks an einem Ende der Luftführung 5 angeklemmt werden. Dabei dient das Band o.ä. als Einführhilfe.

Alternativ kann auch ein elastischer Schlauch als Einführhilfe vorgesehen sein, wobei dieser gleichzeitig zum Anlegen des Unterdrucks dienen kann.

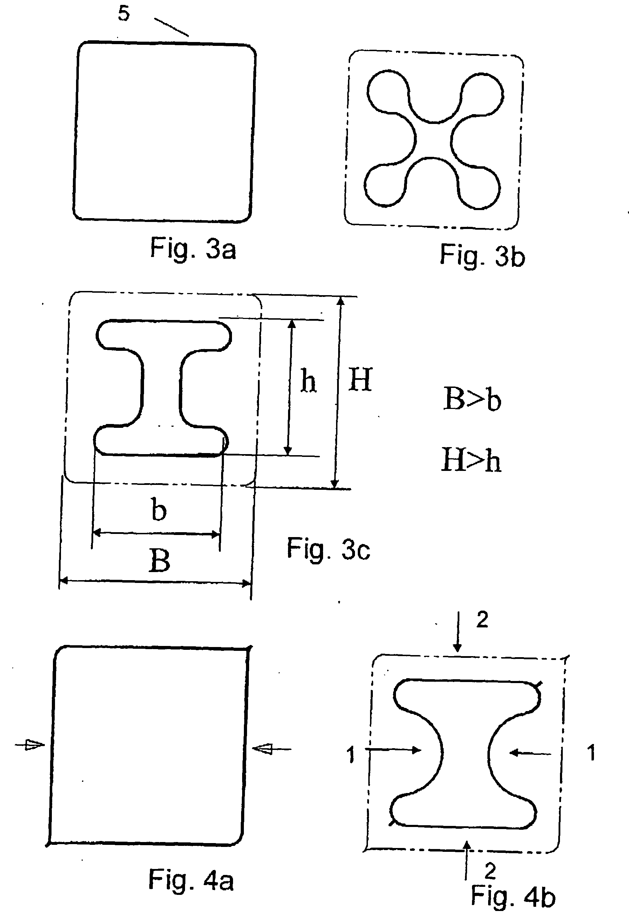

Varianten möglicher Faltungen sind in der Zeichnung dargestellt. Sowohl Luftführungen mit kreisförmigen als auch eckigen Querschnitten können gefaltet werden. So zeigen Figuren 3a bis 3c einen quadratischen Querschnitt, der durch Anlegen eines Unterdrucks zu einem X-förmigen (Fig. 3b) oder H-förmigen (Fig. 3c) Querschnitt zusammengefaltet wird. Im Falle eines H-förmigen Querschnitts sind die Abmessungen B und H des Ursprungsquerschnitts größer als die entsprechenden Abmessungen b und h des zusammengefalteten Querschnitts, der in Fig. 3c etwas vergrößert gestrichelt dargestellt ist.

Figuren 4a und 4b zeigen das Falten einer Luftführung, die durch Zusammenfügen zweier Folien gebildet ist. Hierbei wird seitlich, wie durch Pfeile in Fig. 4a und die mit 1 gekennzeichneten Pfeile und Stempel in Fig. 4b angedeutet, zuerst von einer Seite her gefaltet. Anschließend erfolgt ein Falten in Richtung der mit 2 gekennzeichneten Pfeile, so dass sich ein X-förmiger Querschnitt im gefalteten Zustand ergibt.

In Figuren 5a und 5b ist eine Variante des Faltens dargestellt, wobei wiederum zuerst in Richtung der mit 1 gekennzeichneten Pfeile und anschließend in Richtung der mit 2 gekennzeichneten Pfeile die Seitenmitten nach innen gefaltet werden, so dass sich wiederum ein X-förmiger Querschnitt ergibt, wie in Fig. 5b dargestellt. Gemäß einer Variante, die in Fig. 5c dargestellt ist, erfolgt ein gleichzeitiges Falten durch von außen senkrecht zur Luftführungsfläche angreifende Stempel, wie durch Pfeile angedeutet.

Alternativ zu einem einseitigen Verjüngen im Bereich der Falthilfe 6 (vgl. Fig. 8b) kann die Verjüngung auch von beiden Seiten her vorgesehen sein, wie in Fig. 8a dargestellt.

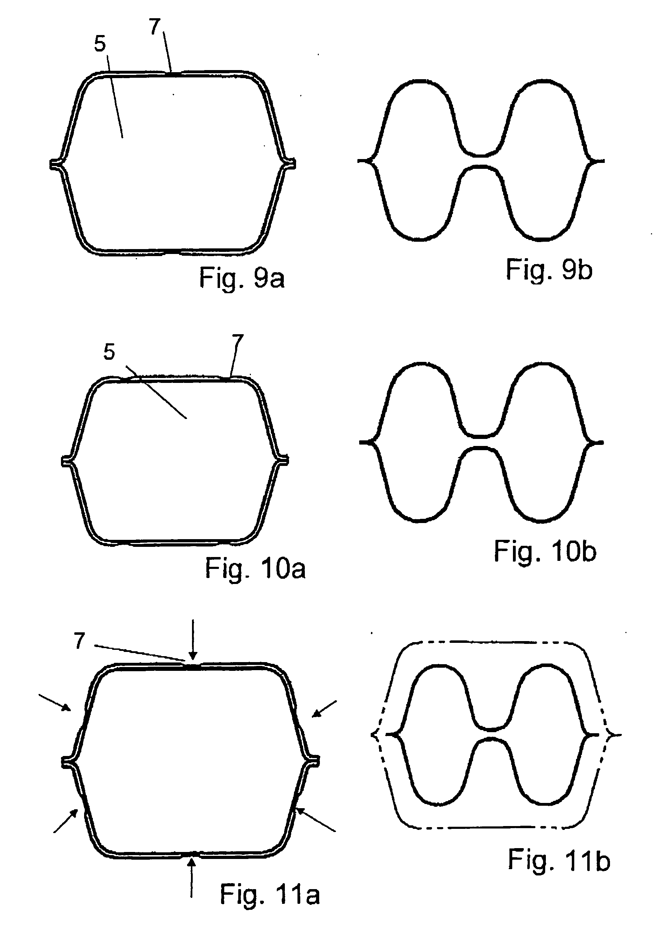

Figuren 9a und 9b zeigen eine weitere Möglichkeit der Faltung der Luftführung 5 zu einer H-förmigen Gestalt, wobei oben und unten Falthilfen 6 vorgesehen sind. In den Figuren 10a und 10b ist die Falthilfe 6 an den Ecken vorgesehen, wobei sich wiederum eine H-Form ergibt. Bei den Figuren 11a und 11b sind die Falthilfen mittig und benachbart zu den Verschweißungen der Folien seitlich vorgesehen.

Das Vorsehen der Faltmarken kann vor dem Ausformen der Führung in den Zuschnitten technisch einfacher realisiert werden. So kann beispielsweise die Wandstärke in den Bereichen der Faltmarken lokal heiß verprägt werden, ähnlich wie es an den Rändern der späteren Führung der Fall sein kann. Ebenfalls ist - auch bei einer Ausbildung zu einem anderen Zeitpunkt - ein mechanisches Verprägen (Quetschen) bei Raumtemperatur möglich, wobei nur eine relativ geringe Wanddickenverringerung verbleibt, die jedoch als Falthilfe ausreicht.

Ebenso können die Faltmarken auch während des Ausformens der Führung in dieselbe eingebracht werden.

Im Falle des Twin-sheet-Verfahrens lassen sich die Faltmarken auch als Sicken oder Nuten einfach im Prozess herstellen. Hierbei entstehen gezielt lokale Ausdünnungen der Wandstärke, die ein geordnetes Falten begünstigen. Durch voreilende Schieber kann die Ausdünnung der Wandstärke auch ohne große Sicken im endgültigen Bauteil hergestellt werden. Dann bleiben lediglich geringe Markierungen in der Wand der Führung in Folge der Radien der Schieber.

Gemäß einem weiteren, nicht in der Zeichnung dargestellten Ausführungsbeispiel wird die Falthilfe zusätzlich durch lokal aufgebrachtes Material, was zu einer Versteifung der Führung direkt neben der Sollfaltstelle führt, gebildet. Dabei ist vorliegend das aufgebrachte Material das gleiche Material wie das der Führung. Ebenso kann jedoch ein anderes Material, bspw. ein Metalldraht aufgebracht werden.

Das Einführen der Führung kann auch mit Hilfe einer Einführhilfe erfolgen, welche durch zwei längliche, vorzugsweise elastische Platten gebildet wird, zwischen welche die gefaltete Führung eingelegt wird, und die nach dem Erreichen der Endstellung wieder entfernt werden. Anschließend erfolgt das Entfalten. Das Falten kann auch beim Einlegen der Führung zwischen die beiden Platten erfolgen. Je nach Ausgestaltung kann ggf. auch das Vorsehen einer einzigen Platte oder das Vorsehen von mehr als zwei Platten sinnvoll sein.

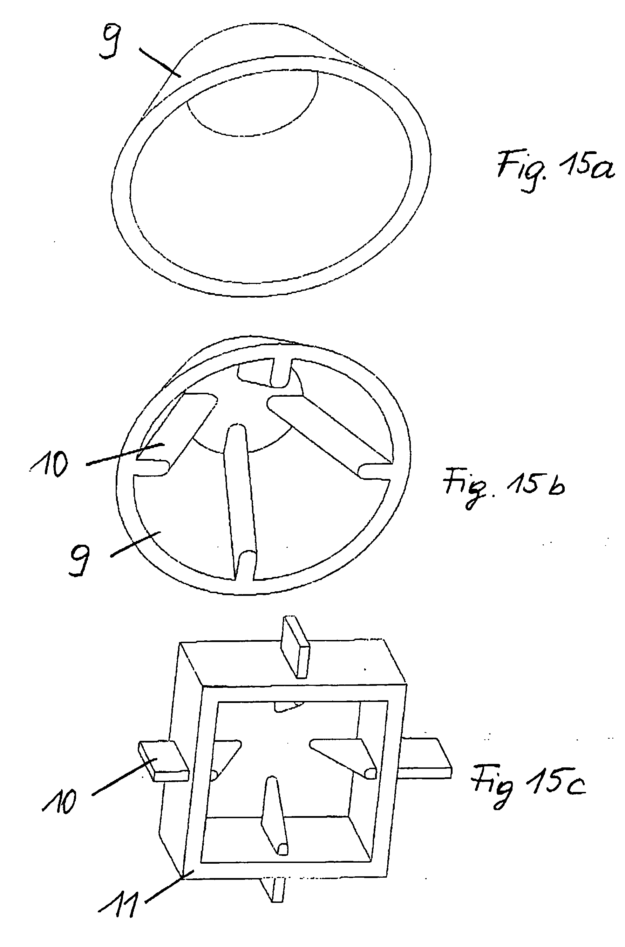

In den Figuren 15a, 15b und 15c sind unterschiedliche Einführhilfen dargestellt, die als Trichter oder zumindest trichterartig ausgeführt sind. Der in Fig.15a gezeigte Trichter 9 entspricht in seiner Form im Wesentlichen einem Kegelstumpf. Ein entsprechend kegelstumpfartiger Trichter 9 ist auch in Fig. 15b dargestellt, wobei dieser in seinem Mantelinneren vier Rippen oder Stifte 10 aufweist, die im Wesentlichen in Einführrichtung beziehungsweise in Richtung einer Erzeugenden der Mantelfläche verlaufend ausgebildet sind. Die Rippen 10 weisen in Längsrichtung einen konstanten Querschnitt auf, wobei insbesondere die Außenseite, also die in das Innere des Trichters weisende Seite abgerundet ist um Beschädigungen beim Einführen der Führung 5 zu vermeiden. Die Rippen sind bevorzugt so angeordnet, dass diese während des Einführens der Führung durch den Trichter die Faltung der Führung an den dafür vorgesehenen Falthilfen wie Materialverjüngungen oder Faltmarken unterstützen beziehungsweise bewirken. Hierzu kann es auch zweckmäßig sein die Rippen konisch verlaufend auszubilden, also mit einem sich in Längsrichtung betrachteten veränderlichen Querschnitt. Die entsprechenden Endbereiche des Trichters 6 müssen selbstverständlich nicht, wie vorliegend kreisförmig ausgebildet sein, sondern können beispielsweise auch ovale, elliptische oder polygonförmige Konturen aufweisen, wobei vorzugsweise die Ecken im Falle polygonförmiger Strukturen wie beispielsweise Rechtecken, Quadraten oder beliebiger Vielecke abgerundet sind. Eine weitere Einführhilfe zeigt Fig. 15c, wobei der Trichter durch einen im Wesentlichen quadratischen Rahmen 11, in welchen an den vier Seiten, Rippen 10 hineinragen, die mit einer abgeschrägten Seitenfläche oder Kante im, in den Trichter hineinragenden Bereich ausgeführt sind, gebildet wird. Durch diese zumindest bereichsweise schräge Ausführung der Rippen im Innenteil des Rahmens 11 entsteht ebenfalls eine im Wesentlichen trichterförmige Anordnung, wobei auch in diesem Fall die Rippen 10, so ausgeführt sind, dass während des Einführens der Führung durch den Rahmen 11 die Faltung der Führung an den dafür vorgesehenen. Falthilfen oder Faltmarken unterstützt beziehungsweise hervorgerufen wird. Die vorliegende Anordnung mit vier symmetrisch angeordneten Rippen 10 eignet sich beispielsweise besonders für eine in Fig. 3b dargestellte Führung. Die Anzahl und Anordnung der Rippen ist vorteilhafterweise auf die Falthilfen der Führung angepasst.

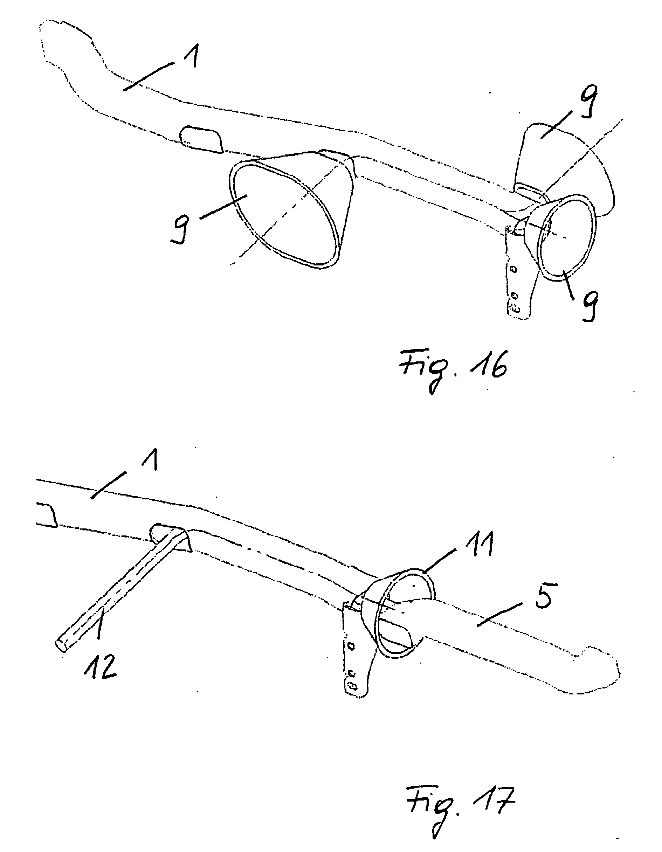

Fig. 16 zeigt einen mit Einführhilfen in Form von Trichtern 9 ausgebildeten Querträger 1, wobei die Trichter 9 jeweils an einer Öffnung des Querträgers angesetzt sind. Dies können wie vorliegend Luftaustrittsöffnungen oder auch eine stirnseitige Öffnung am Endbereich des Querträgers im Verbindungsbereich mit den A-Säulen eines Kraftfahrzeugs vorgesehen ist. Die Trichter können beispielsweise über eine Einhak-, Einschnapp- oder Einrastverbindung am Querträger fixiert sein. Denkbar wäre auch ein aus Kunststoff angespritzter Trichter, der über vorgesehene Sollbruchstellen nach Einführung einer Führung entfernt werden kann.

Die Einführung einer Luftführung 5 über das stirnseitige Ende mittels eines Trichters 9 als Einführhilfe ist in Fig. 17 dargestellt. Ein elastischer Schlauch 12 ist im Bereich des Trichters endseitig mit der Führung 5 verbunden und ragt mit seinem anderen Ende aus einer weiteren Öffnung aus dem Querträger. Der elastische Schlauch 12 lässt sich leicht in den Querträger Einziehen und unterstützt bei weiterem Ziehen die Einführung der Luftführung 5, welche mit nicht dargestellten Falthilfen, beispielsweise entsprechend ausgeführten Materialverjüngungen ausgeführt ist. Der Schlauch 12, kann gleichzeitig auch als Luftfördermittel zum Erzeugen von Unterdruck in der Führung 5 vor dem Einführen oder zum Aufblasen und Entfalten der Führung nach dem Einbringen in die Endposition dienen.

Beim Querträger muss es sich nicht notwendigerweise um einen zwei- oder mehrteiligen Querträger aus Metallschalen handeln. Der Querträger kann auf beliebige andere Weise hergestellt sein, insbesondere auch einstückig ausgebildet sein.

Neben Querträgern von Kraftfahrzeugen kommen auch andere Träger mit zumindest bereichsweise hohler Struktur in Frage, in welche eine Führung integriert wird, durch die ein Medium strömt. Im Falle einer Flüssigkeit oder von Partikeln ist die Führung entsprechend stabiler und auf die speziellen Anforderungen bei Betrieb hin ausgelegt auszubilden.

## Patentansprüche

1. Führung, insbesondere Luftführung (5) für ein Kraftfahrzeug, zur Durchleitung eines Mediums, wobei mindestens eine Sollfaltstelle als Falthilfe (6) zum gezielten und positionierten Falten der Führung vorgesehen ist, **dadurch gekennzeichnet, dass** das Material der Führung im Bereich einer Sollfaltstelle verdichtet ist.

2. Führung nach Anspruch 1, **dadurch gekennzeichnet, dass** eine Einführhilfe vorgesehen ist.

3. Führung nach Anspruch 1 oder 2, **dadurch gekennzeichnet, dass** die Führung zumindest bereichsweise elastisch ausgebildet ist.

4. Führung nach einem der vorhergehenden Ansprüche, **dadurch gekennzeichnet, dass** die Führung Bereiche unterschiedlicher Elastizität aufweist, wobei im Bereich der Sollfaltstelle die Elastizität größer ist als in den hierzu benachbarten Bereichen.

5. Führung nach einem der vorhergehenden Ansprüche, **dadurch gekennzeichnet, dass** die Dicke (d) der Wand im Bereich der Sollfaltstelle um mindestens 20% geringer als die Dicke (D) im übrigen Bereich der Wand ist und/oder dass die Falthilfe zusätzlich eine Sicke oder eine Materialverdoppelung aufweist.

6. Führung nach einem der vorhergehenden Ansprüche, **dadurch gekennzeichnet, dass** die Dicke (D) der Wand 1,0 bis 6 mm beträgt.

7. Führung nach einem der vorhergehenden Ansprüche, **dadurch gekennzeichnet, dass** die Dicke (d) der Wand im Bereich der Falthilfe 0,5 bis 4,8 mm beträgt.

8. Führung nach einem der vorhergehenden Ansprüche, **dadurch gekennzeichnet, dass** die Führung durch einen Schaumstoff, insbesondere einen PU-Schaum, einen thermoplastischen Schaum, thermoplastisches Polyolefin (TPO), thermoplastisches Polyurethan (TPU), einen chemisch oder physikalisch geschäumten Thermoplast, einen Partikelschaum oder einen Mineralschaum, gebildet ist.

9. Führung nach Anspruch 8, **dadurch gekennzeichnet, dass** der Schaumstoff ein chemisch geschäumter Schaumstoff aus Trocellen ® C 070 04 RN5 oder C 070 03 RN5 ist.

10. Führung nach einem der vorhergehenden Ansprüche, **dadurch gekennzeichnet, dass** die Sollfaltstelle im Bereich einer Krümmung vorgesehen ist, wobei sie seitlich an der Führung beidseitig ausgebildet und gerade, tangential zum mittleren Krümmungsradius verläuft.

11. Führung nach einem der Ansprüche 2 bis 10, **dadurch gekennzeichnet, dass** die Einführhilfe durch ein Band, ein Seil, einen Draht, einen Schlauch, einen Trichter und/oder mindestens eine Platte gebildet ist.

12. Führung nach Anspruch 11, **dadurch gekennzeichnet, dass** die Einführhilfe während des Einführens der Führung lösbar an der Führung angebracht ist.

13. Führung nach Anspruch 11, **dadurch gekennzeichnet, dass** die durch einen Trichter gebildete Einführhilfe Stifte oder Rippen aufweist, welche das Falten der Führung an der Sollfaltstelle beim Einziehen oder - schieben derselben bewirken.

14. Führung nach einem der vorhergehenden Ansprüche, **dadurch gekennzeichnet, dass** die Führung im gefalteten Zustand einen U-, C-, X-, H-, W-, V-, I- oder L- förmigen Querschnitt im Bereich quer durch die Falthilfe(n) (6) aufweist.

15. Verfahren zur Montage einer Führung, insbesondere einer Luftführung (5), gemäß einem der Ansprüche 1 bis 15 in ein Bauteil (1), wobei die mit einer Falthilfe (6) ausgebildete oder versehene Führung vor der Montage zusammengefaltet und nach dem Einführen auseinandergefaltet wird, **dadurch gekennzeichnet, dass** das für die Montage im Innenraum der Führung ein Unterdruck erzeugt wird.

16. Verfahren nach Anspruch 15, **dadurch gekennzeichnet, dass** das für die Erzeugung des Unterdrucks ein Ende der Führung abgeklemmt oder verschlossen wird.

17. Verfahren nach Anspruch 16, **dadurch gekennzeichnet, dass** gleichzeitig mit dem Abklemmen eine Einführhilfe an der Führung festgeklemmt wird.

18. Verfahren nach einem der Ansprüche 15 bis 17, **dadurch gekennzeichnet, dass** eine Einführhilfe durch einen Schlauch gebildet wird, durch welchen ein Unterdruck im Innenraum der Führung erzeugt wird.

## Claims

1. Duct, in particular an air duct (5) for a motor vehicle, for conducting a medium, such that at least one intentional folding point is provided as a folding aid (6) for the intended and positioned folding of the duct, **characterised in that** the material of the duct is compressed in the area of the intentional folding point.

2. Duct according to Claim 1, **characterised in that** an insertion aid is provided.

3. Duct according to Claims 1 or 2, **characterised in that** the duct is elastic, at least in some areas.

4. Duct according to any of the preceding claims, **characterised in that** the duct has areas of different elasticity, such that in the area of the intentional folding point the elasticity is greater than in the areas adjacent thereto.

5. Duct according to any of the preceding claims, **characterised in that** the wall thickness (d) in the area of the intentional folding point is at least 20% smaller than the thickness (D) is other areas of the wall, and/or the folding aid also comprises a seam or a doubling of the material.

6. Duct according to any of the preceding claims, **characterised in that** the wall thickness (D) is 1.0 to 6 mm.

7. Duct according to any of the preceding claims, **characterised in that** the wall thickness (d) in the folding aid area is 0.5 to 4.8 mm.

8. Duct according to any of the preceding claims, **characterised in that** the duct is made of a foam material, in particular a PU foam, a thermoplastic foam, thermoplastic polyolefin (TPO), thermoplastic polyurethane (TPU), a chemically or physically foamed thermoplastic, a particle foam or a mineral foam.

9. Duct according to Claim 8, **characterised in that** the foam material is a chemically foamed material made from Trocellen ® C 070 04 RN5 or C 070 03 RN5.

10. Duct according to any of the preceding claims, **characterised in that** the intentional folding point is provided in the area of a curve and is formed laterally on both sides of the duct, extending straight, tangentially to the central radius of curvature.

11. Duct according to any of Claims 2 to 10, **characterised in that** the insertion aid consists of a strip, cable, wire, hose, funnel and/or at least one plate.

12. Duct according to Claim 11, **characterised in that** during the insertion of the duct the insertion aid is fixed detachably on the duct.

13. Duct according to Claim 11, **characterised in that** the insertion aid formed by a funnel comprises pins or ribs, which cause the duct to fold at the intended folding point when they are pulled in or pushed.

14. Duct according to any of the preceding claims, **characterised in that** in the folded condition the duct has a U-, C-, X-, H-, W-, V-, I- or L-shaped cross-section in the area transversely through the folding aid(s).

15. Method for fitting a duct, in particular an air duct (5) according to any of Claims 1 to 14 into a component (1), such that the duct formed or provided with a folding aid (6) is folded together before fitting and unfolded after insertion, **characterised in that** to assist fitting a reduced pressure is produced in the inside space of the duct.

16. Method according to Claim 15, **characterised in that** to produce the reduced pressure, one end of the duct is clamped shut or sealed off.

17. Method according to Claim 16, **characterised in that** at the same time as the clamping shut, an insertion aid is fixed firmly onto the duct.

18. Method according to any of Claims 15 to 17, **characterised in that** an insertion aid is formed by a hose, through which a reduced pressure is produced in the inside space of the duct.

## Revendications

1. Conduite, en particulier conduite d'air (5) pour un véhicule automobile, servant à la circulation d'un milieu, où il est prévu au moins un point destiné au pliage servant d'aide au pliage (6), pour le pliage approprié et positionné de la conduite, **caractérisée en ce que** le matériau de la conduite est comprimé dans la zone d'un point destiné au pliage.

2. Conduite selon la revendication 1, **caractérisée en ce qu'**il est prévu une aide à l'introduction.

3. Conduite selon la revendication 1 ou 2, **caractérisée en ce que** la conduite est configurée de façon élastique, au moins par zones.

4. Conduite selon l'une quelconque des revendications précédentes, **caractérisée en ce que** la conduite présente des zones d'élasticité différente où, dans la zone du point destiné au pliage, l'élasticité est supérieure à celle présente dans les zones voisines dudit point destiné au pliage.

5. Conduite selon l'une quelconque des revendications précédentes, **caractérisée en ce que** l'épaisseur (d) de la paroi est, dans la zone du point destiné au pliage, inférieure d'au moins 20 % à l'épaisseur (D) dans l'autre partie de la zone de la paroi, et / ou **en ce que** l'aide au pliage présente en outre une moulure ou un doublage de matière.

6. Conduite selon l'une quelconque des revendications précédentes, **caractérisée en ce que** l'épaisseur (D) de la paroi est comprise entre 1,0 mm et 6 mm.

7. Conduite selon l'une quelconque des revendications précédentes, **caractérisée en ce que** l'épaisseur (d) de la paroi, dans la zone de l'aide au pliage, est comprise entre 0,5 mm et 4,8 mm.

8. Conduite selon l'une quelconque des revendications précédentes, **caractérisée en ce que** la conduite est formée par une mousse synthétique, en particulier par une mousse de polyuréthane (PU), une mousse thermoplastique, une polyoléfine thermoplastique (TPO), par du polyuréthane thermoplastique (TPU), par un thermoplastique expansé chimiquement ou physiquement, par une mousse de particules ou bien par une mousse minérale.

9. Conduite selon la revendication 8, **caractérisée en ce que** la mousse synthétique est une mousse synthétique expansée chimiquement, du type C 070 04 RN5 ou C 070 03 RN5 de la société Trocellen^{®}.

10. Conduite selon l'une quelconque des revendications précédentes, **caractérisée en ce que** le point destiné au pliage est prévu dans la zone d'une courbure, le point destiné au pliage étant configuré des deux côtés de la conduite et s'étendant de façon rectiligne et tangentielle par rapport au rayon de courbure central.

11. Conduite selon l'une quelconque des revendications 2 à 10, **caractérisée en ce que** l'aide à l'introduction est formée par une bande, un câble, un fil, un flexible, un entonnoir et / ou au moins par une plaque.

12. Conduite selon la revendication 11, **caractérisée en ce que** l'aide à l'introduction est fixée sur la conduite, de façon détachable, au cours de l'introduction de la conduite.

13. Conduite selon la revendication 11, **caractérisée en ce que** l'aide à l'introduction, formée par un entonnoir, présente des parties saillantes ou nervures qui provoquent le pliage de la conduite, au niveau du point destiné au pliage, lorsque l'on rentre ou que l'on fait coulisser ladite conduite.

14. Conduite selon l'une quelconque des revendications précédentes, **caractérisée en ce que** la conduite à l'état plié présente, dans la zone transversale par rapport à l'aide ou aux aides (6) au pliage, une section en U, en C, en X, en H, en W, en V, en I ou bien en L.

15. Procédé de montage d'une conduite, en particulier d'une conduite d'air (5), dans une pièce de structure (1), conformément à l'une quelconque des revendications 1 à 14, où la conduite configurée en comportant une aide au pliage (6), ou bien dotée de celle-ci, est repliée avant le montage et dépliée après l'introduction, **caractérisé en ce que**, pour le montage, une dépression est produite dans l'espace intérieur de la conduite.

16. Procédé selon la revendication 15, **caractérisé en ce qu'**une extrémité de la conduite est pincée ou obturée, pour la production de la dépression.

17. Procédé selon la revendication 16, **caractérisé en ce qu'**une aide à l'introduction est serrée à bloc sur la conduite, en même temps que l'on effectue le pincement.

18. Procédé selon l'une quelconque des revendications 15 à 17, **caractérisé en ce qu'**une aide à l'introduction est formée par un flexible à travers lequel une dépression est produite dans l'espace intérieur de la conduite.
